Europäisches Patentamt

European Patent Office

Office européen des brevets

(11) Publication number: **0 104 787**

**B1**

## (12) EUROPEAN PATENT SPECIFICATION

(45) Date of publication of patent specification: **25.02.87**

(21) Application number: **83305008.1**

(22) Date of filing: **31.08.83**

(51) Int. Cl.⁴: **F 16 K 31/06**

(54) Low power electromagnetic valve.

(30) Priority: **07.09.82 US 415672**

(43) Date of publication of application:
**04.04.84 Bulletin 84/14**

(45) Publication of the grant of the patent:
**25.02.87 Bulletin 87/09**

(84) Designated Contracting States:
**AT BE CH DE FR GB IT LI LU NL SE**

(56) References cited:
**DE-A-2 023 967**
**FR-A-2 205 980**
**GB-A- 853 469**
**US-A-2 820 604**

(73) Proprietor: **GREATBATCH ENTERPRISES, INC.**
**10,000 Wehrle Drive**
**Clarence New York 14031 (US)**

(72) Inventor: **Falk, Theodore J.**
**10880 Boyd Drive**
**Clarence New York 14031 (US)**
Inventor: **Morris, Lawrence E.**
**10 Maple Drive**
**Bowmansville New York 14026 (US)**

(74) Representative: **Brown, David Alan et al**
**MATHYS & SQUIRE 10 Fleet Street**
**London EC4Y 1AY (GB)**

Courier Press, Leamington Spa, England.

EP 0 104 787 B1

# Description

This invention relates to electromagnetically-operated fluid valves.

One area of use of the present invention is implantable drug delivery systems, although the principles of the present invention can be variously applied. The principal requirements for a valve in such applications are low power drain, since the valve must be driven by an implanted battery, and compatibility with the drug being handled. It would, therefore, be highly desirable to provide an electromagnetically-operated valve which is safe, reliable, small in size, light in weight, which operates without excessive demand on the available energy supply and which can be made compatible with drugs or similar liquids being handled.

United States patent specification 2.820.604 describes an electromagnetic valve comprising a housing including a fluid containing region and first and second ports in fluid communication with said region; electromagnet means carried by said housing and located externally of said fluid containing region; barrier means of fluid-impervious material for isolating said electromagnet means from said fluid containing region of said housing; an armature movably positioned in said fluid containing region of said housing and having a pole portion located for magnetic attraction by said electromagnet means and having a valve portion located for opening and closing one of said ports to place said ports in fluid communication through said fluid containing region in one control state of the valve and to block fluid communication between said ports through said fluid containing region in another control state of the valve; between said pole portion and said electromagnet means being a gap located in said fluid containing region and external to said electromagnet means, said armature moving towards said electromagnet means to close said gap in response to electrical energization of said electromagnet thereby to change the control state of the valve.

It is an object of this invention to provide an electromagnetic valve of improved electrical and magnetic efficiency.

This object is achieved by the electromagnetic valve of the present invention, which is characterised in that a body of magnetically permeable material is positioned in the fluid containing region of the housing between the first and second ports, said body having a passage therethrough receiving the armature pole portion in a movable close-fitting relation, said body defining a portion of a magnetic circuit including the electromagnet means, the armature pole portion and the gap between the armature pole portion and the electromagnet means.

In a preferred embodiment of the invention, the axial length of said passage in said body is relatively large as compared to the length of the space between the inner surface of said passage and the outer surface of said armature pole portion, to minimize the effective air gap defined therebetween and introduced in said magnetic circuit.

The invention will now be described, by way of example, with reference to the accompanying drawings, in which:—

Figure 1 is a side elevational view of a valve according to the present invention;

Figure 2 is an enlarged longitudinal sectional view, partly in elevation, of the valve of Figure 1;

Figure 3 is a fragmentary longitudinal view of the valve of Figure 2 showing the armature in a rest position;

Figure 4 is a sectional view taken about on line 4—4 in Figure 2;

Figure 5 is a sectional view taken about on line 5—5 in Figure 2;

Figure 6 is a fragmentary sectional view taken about on line 6—6 in Figure 4;

Figure 7 is a sectional view taken about on line 7—7 in Figure 2; and

Figure 8 is a sectional view taken about on line 8—8 in Figure 2.

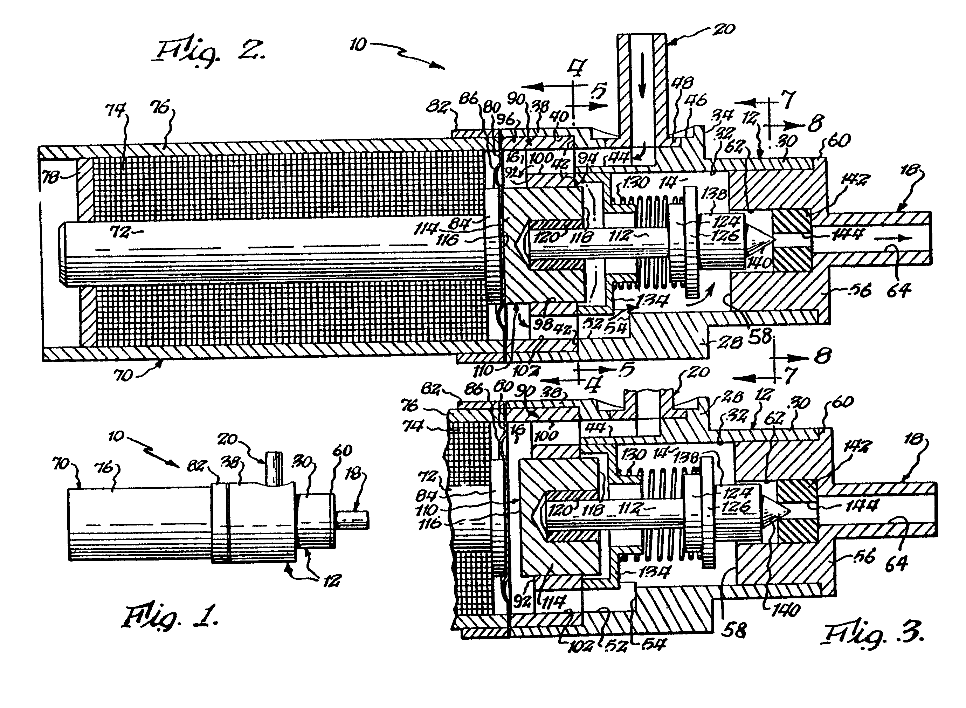

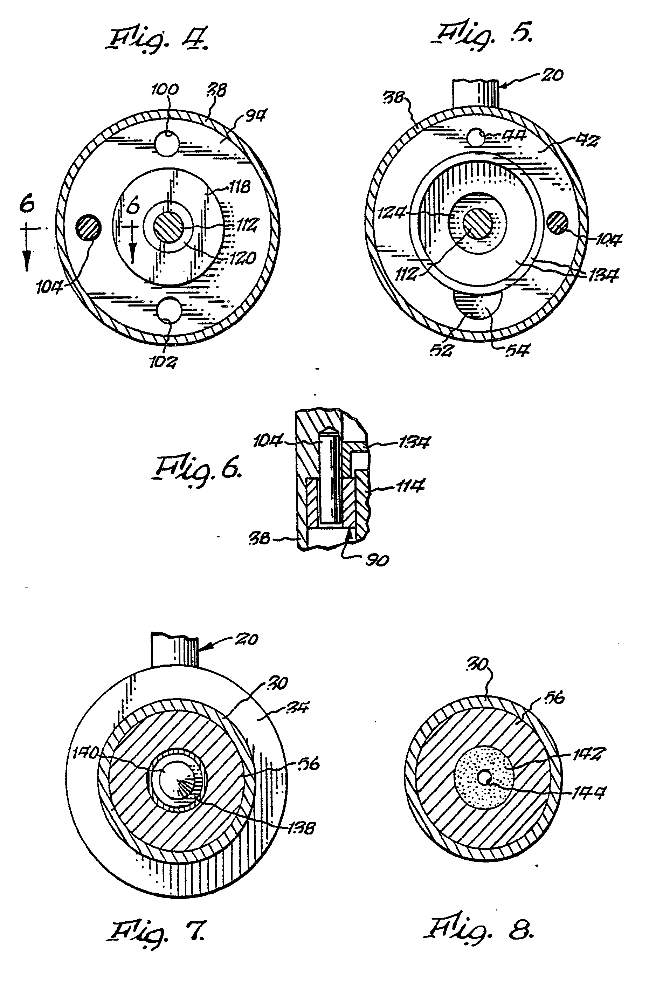

Referring now to Figures 1—8, a valve 10 according to the present invention includes a housing 12 which is generally hollow cylindrical in overall shape and includes an interior region for containing fluid, i.e. the liquid to be delivered. As shown in Figure 2, the hollow interior region is divided in a manner which will be described into a first chamber 14 and a second chamber 16 in fluid communication therewith. There is a first port generally designated 18 in fluid communication with the first chamber 14 and adapted to be connected in the fluid handling circuit. There is also a second port 20 in fluid communication with the second chamber 16 and adapted to be connected in the fluid handling circuit. In the illustrative valve shown, port 20 is connected to the relatively higher pressure portion of the fluid circuit, and port 18 is connected to the relatively lower pressure portion. Thus, port 20 may be viewed as the valve inlet and port 18 as the valve outlet.

Referring now to Fig. 2, housing 12 is generally hollow cylindrical in overall shape including a central body portion 28 of relatively substantial wall thickness. Housing 12 also includes a first axial end portion 30 extending from one end of body portion 28, i.e. the righthand end as viewed in Fig. 2, and which is of relatively smaller wall thickness. Portions 28 and 30 define the interior region of constant diameter having an inner surface 32. Thus, the outer surfaces of portions 28 and 30 are of different diameters and meet in an annular surface 34. The housing 12 has a second axial end portion 38 extending from the other end of body 28, i.e. the left-hand end as viewed in Fig. 2, which also is of smaller wall thickness. End portion 38 has a relatively larger diameter inner wall surface 40 which meets surface 32 in annular intermediate wall 42.

Body portion 28 is provided with a longitudinal bore or passage 44 in the upper portion of wall 42 as viewed in Fig. 2 for placing chamber 16 in fluid communication with port 20. Port 20 is located on the side of housing 12 for communication with the passage 44. Housing portion 28 is provided with a radially extending opening in the outer wall thereof in communication with passage 44. The opening is formed to include an annular recess 46 defining a ledge which engages an annular rim 48 of a tubular fitting which defines the port 20. Body portion 28 also is provided with a recess 52 in the lower portion of wall 42 as viewed in Fig. 2 for placing chamber 16 in fluid communication with chamber 14. Recess 52 is generally semicircular in shape and terminates in an inner wall 54 which, in turn, meets surface 32. Port 20 is adapted for connection to a conduit such as a flexible tubing comprising a portion of the fluid conduit.

Port 18 is provided by a plug-like element which is fitted into the open end of the housing axial end portion 30. The element includes a main body 56 generally cylindrical in shape and having an outer diameter substantially equal to the diameter of inner wall surface 32 thereby providing a close fit therein. Body 56 has one axial end face 58 located in chamber 14, and adjacent the opposite end face the outer surface of body 56 is provided with an annular rim 60 which abuts the annular end face of housing portion 30 for placement and securement of the fitting in the housing. The two components are secured together by welding or other suitable means. The body portion 56 has an internal wall surface 62 defining a region of substantial diameter. The port 18 is defined by a relatively smaller diameter portion of the plug element having an internal passage 64 of relatively smaller diameter compared to passage 62. Port 18 is adapted for connection to a conduit such as a flexible tubing forming a portion of the fluid circuit.

By way of example, in an illustrative valve, housing 12 and the port fittings 18 and 20 all are of metal, and for a drug delivery pump for implantation in a patient, titanium has been found to provide satisfactory results. In such an illustrative valve, housing 12 has an overall length of about 9.8 mm (0.385 inch) measured between the axial end face of portions 30 and 38. Surface 32 has a diameter of about 4.3 mm (0.170 inch), and the axial end face of portion 30 has a radial dimension of about 0.76 mm (0.030 inch). Surface 40 has a diameter of about 6.6 mm (0.260 inch), and the axial end face of housing portion 38 has a radial thickness of about 0.51 mm (0.020 inch). Passage 44 in housing body 28 and the interior passage in port fitting 20 both have a diameter of about 0.51 mm (0.020 inch). In the port fitting 18, the passage 62 has a diameter of about 1.85 mm (0.073 inch) and passage 64 has a diameter of about 0.81 mm (0.032 inch).

The valve of the present invention further comprises electromagnet means generally designated 70 carried by housing 12 and located external to the fluid containing region of the housing. As shown in Fig. 2, the electromagnet 70 includes a core 72 in the form of a spool which is generally solid cylindrical in shape. A coil 74 is wound on spool 72 and contained within a hollow housing 76 generally cylindrical in shape. One end of electromagnet 70 is adjacent and in abutting relation to housing 12, and the opposite end, i.e. the left-hand end as viewed in Fig. 2, is closed by a plate element 78 fitted within the open end of housing 76 and fitted onto an end of spool 72. Electromagnet 70 is joined to housing 12 in the following manner.

The interior, fluid containing region of housing 12 and the electromagnet 70 are separated by a barrier means of fluid impervious material in the form of a relatively thin plate or diaphragm-like component 80. The end of magnet housing 76 adjacent housing 12 is provided with an annular band 82 around the outer surface and adjacent the axial end face of housing 76. The outer diameter of band 82 when placed on housing 76 is substantially equal to the outer diameter of housing portion 38 so that the respective outer surfaces are substantially flush. The axial end faces of band 82 and magnet housing 76 are coplanar. The housing and electromagnet structures are placed in abutting relation on opposite surface portions of the plate 80, and the assembly secured together by a weld joining the respective adjacent outer surfaces of band 82 and housing portion 38. In addition, an enlarged annular end portion 84 of spool 72 contacts the central portion of plate 80 in a manner supporting the same. Plate 80 is formed with an annular groove or depression 86 in the surface facing magnet 70 and having an inner diameter substantially equal to the outer diameter of spool end 84 to receive end 84 therein and strengthen plate 80.

By way of example, in an illustrative valve, spool 72, magnet housing 76 and closure 78 are of ferromagnetic material, for example 0.4750 nickel iron alloy. Plate 80 and band 82 are of titanium, the material of plate 80 being found suitable for use in the exemplary implanted drug delivery pump previously mentioned. Spool 72 has a length of about 14.1 mm (0.555 inch) and a diameter of 2.01 mm (0.079 inch). Housing 76 has a wall thickness of about 0.76 mm (0.03 inch), band 82 a thickness of about 0.51 mm (0.02 inch) and diaphragm 80 a thickness of about 0.025 mm (0.001 inch). Coil 74 is about 7600 turns of 45 gauge wire.

The valve of the present invention further comprises a body 90 of magnetically permeable material in the fluid containing region of housing 12 and between the first and second chambers 14 and 16, respectively. In addition to defining portions of the two chambers, body 90 also defines a portion of the magnetic circuit in the valve, along with other components of the valve, in a manner which will be described. Body 90 is generally solid cylindrical in shape having an outer diameter substantially equal to the diameter of housing inner surface 40 thereby providing a close fitting relationship. Body 90 has a main body portion between axial end surfaces 92 and 94 which is of an axial length less than the distance between housing surface 42 and plate 80 by an amount determined by the desired dimension of chamber 16. Body 90 is formed to include an outer annular rim portion 96 extending from end face 92 and which abuts a corresponding surface portion of plate 80 as shown in Fig. 2. The radial thickness of rim portion 96 is substantially equal to that of magnet housing 76, and the two are in substantial alignment for maximizing transmission of magnetic flux therebetween in a manner which will be described. Body 90 is provided with a central through bore or passage 98 of substantial diameter for receiving a portion of the valve armature in a manner which will be described. The main portion of body 90 also is provided with a first, smaller through bore or passage 100 offset from passage 98 and of substantially the same diameter and in registry with outlet passage 44 thereby providing fluid communication between chamber 16 and port 20. There is a second, small through bore or passage 102 offset from passage 98 and in communication with recess 52 thereby providing fluid communication between chamber 16 and chamber 14. Body 90 is positioned in housing 12 by means of a rod 104 extending through corresponding bores in body 90 and valve housing portion 28 shown in Figs. 4—6, the bolt 104 preferably being of Teflon material and the parts being secured together by a compression fit.

By way of example, in an illustrative valve, body 90 is of mu metal which is selected to provide the desired degree of magnetic permeability while at the same time being compatible with medicine or the like for use in the exemplary implanted drug delivery valve previously mentioned. As it is well known, mu metal includes nickel in a major portion with the balance including iron, copper and chromium. In addition some or all of the external surfaces of body 90 can be plated or coated with gold or some other suitable material chosen to enhance the compatibility of the drug with the external surfaces. The outer diameter of body 90 is about 6.60 mm (0.260 inch), the axial length between end face 94 and the end face of rim 96 is about 2.29 mm (0.090 inch), and the axial length between end faces 92,94 is about 1.52 mm (0.060 inch). Passage 100 has a diameter of about 0.74 mm (0.029 inch), central passage 102 has a diameter of about 0.74 mm (0.029 inch).

The valve according to the present invention further comprises an armature generally designated 110 positioned in the fluid containing region of housing 12. The armature has a pole portion located for magnetic attraction by the electromagnet 70, a plunger portion in the chamber 16, and a valve portion located for opening and closing port 18. The armature 110 is movably supported in housing 12 for movement from a rest position through a forward stroke when attracted by the electromagnet 70 to open port 18 and place the ports 18, 20 in fluid communication through the chambers 14, 16 and for movement in an opposite direction through a return stroke back to the rest position closing port 18 and blocking fluid communication between ports 18, 20 through chambers 14, 16. In Fig. 2, armature 110 is shown in a position at the end of the forward stroke in response to energization of electromagnet 70, and in Fig. 3 armature 110 is shown in the rest position at the end of the return stroke which will be described in detail presently.

Armature 110 includes a shaft or rod portion 112 which is positioned in housing 12 with the longitudinal axis thereof generally coincident with the longitudinal axis of housing 12. A major portion of the length is a section of relatively small diameter. The armature further includes an enlarged body portion 114 of magnetically permeable material which provides the armature pole portion and the plunger portion in a manner which will be described. Body 114 is solid cylindrical in shape having an outer diameter slightly smaller than the diameter of passage 98 in body 90. This is to allow reciprocal movement of armature body 114 within the body 90 during the forward and return strokes of armature 110. The armature body 114 terminates at the end facing electromagnet 70 in an axial end face 116 which serves as the pole face and is disposed substantially perpendicular to the armature axis. The pole face 116 together with electromagnet 70 define the magnetic circuit gap which is closed during the forward armature stroke. The pole face 116 is of relatively large cross-sectional area as compared to the cross sectional area of the armature shaft portion 112. The body 114 also serves as the plunger portion of the armature, and as the pole face 116 moves toward plate 80 during the forward stroke when magnet 70 is energized, body 114 upon moving into chamber 16 displaces fluid therefrom forcing it out through passages 102, 52 to chamber 14.

Shaft portion 112 is fixed to body 114 in the following manner. Body 114 is provided with a longitudinal bore extending inwardly from the opposite axial end face 118 which terminates within body 114 at a location spaced from pole face 116. A sleeve 120 of fluoropolymer material such as Teflon is fitted in the bore, and the end of the armature shaft portion 112 is fixed in the sleeve or bushing 120. The foregoing is provided by a mechanical compression fit.

Armature 110 includes two relatively larger diameter shaft sections spaced axially from body 114 in a direction opposite therefrom. In particular, there is a first section 124 facing body 114 and a second, axially adjacent section 126 which of slightly larger diameter. The two sections 124, 126 are of relatively short axial length, and they define therebetween an annular shoulder facing the body 114.

There is also provided biasing means in the form of a coil spring 130 for urging armature 110 toward the rest position shown in Fig. 3. One end of spring 130 seats in the annular shoulder defined by the armature shaft sections 124, 126. The opposite end of spring 130 seats in an annular spring retainer element 134 which has an annular rim portion which abuts against the end face 94 of body 90 as shown in Fig. 2. The annular shape of retainer 134, with the two diameter rim sections, enables it to be located concentric with the armature shaft section 112 to receive the spring 130 which also is concentric with the shaft, while at the same time not interfering with body 114 during movement of the armature 110. The outer diameter of the largest rim portion of retainer 134 is substantially less than tha diameter of surface 32, and retainer 134 is merely located within the housing 12, being held in place by the force of spring 130.

Armature 110 has a valve portion at the axial end of the armature opposite that of the pole face 116 for closing the port 18 when the armature is in the rest position and for opening port 18 when the armature is moved during the forward pumping stroke. There is provided an armature shaft section 138 having an outer diameter slightly less than the diameter of passage 62 in body 56. Section 138 terminates in a conical tip formation 140 at the axial end of the armature. The tip 140 is adapted for movement into and out of seating engagement with a body 142 fitted in passage 62 and having a longitudinal passage 144 therein in communication with port passage 64. In particular, the surface of cone 140 contacts the edge of opening 144 during seating of the valve to block fluid communication between port 18 and chamber 14. In the device shown, passage 144 is of smaller diameter than passage 64. The tip 140 is of metal and the element 142 is of relatively soft material, for example silicone rubber, to facilitate the seating of element 140 therein.

By way of example, in an illustrative pump, the armature rod or shaft portion including the sections 112, 124, 126, 138 and 140 is machined from metal, preferably titanium for use in the aforementioned illustratively implanted drug delivery valve. Armature body 114 is of mu-metal, retainer 134 is of titanium and body 142 can be cut from a length of silicone rubber tubing. In addition, armature body 114 can be coated or plated with gold, or other suitable material, like body 90, chosen to enhance the compatibility of the drug with the external surface. Also, the outer surface of body 114 received in passage 98 can be coated with Teflon to reduce friction. The armature shaft or rod portion has an overall length of about 7.75 mm (0.305 inch) from the end fitted within body 114 to the end of the conical tip 140. The smaller diameter section 112 of major axial length has a diameter of about 0.91 mm (0.036 inch), and the relatively larger diameter sections 124 and 126 have diameters of about 2.36 mm and 3.45 mm (0.093 and 0.136 inch), respectively, and axial lengths of about 0.89 mm and 0.38 mm (0.035 and 0.015 inch), respectively. Section 138 has a diameter of about 1.73 mm (0.068 inch) and a length of about 1.47 mm (0.058 inch), and conical tip 140 has an axial length of about 0.94 mm (0.037 inch) and a base angle of about 60°. Body 114 has an overall axial length of about 2.54 mm (0.100 inch) and an outer diameter of about 3.48 mm (0.137 inch). Spring 130 is 0.006 titanium wire and the passage 144 in body 142 has a diameter of about 0.38 mm (0.015 inch).

In operation, port 18 is connected to an appropriate location in the relatively lower pressure portion of a fluid circuit, and port 20 is connected to a location in the higher pressure portion of the circuit. The armature 110 is moved through the forward stroke in response to electrical energization of electromagnet 70. One way of energizing magnet 70 is to charge a capacitor from a battery and then discharge that capacitor through coil 74. Other procedures can of course be employed for electrically energizing coil 74 in a known manner. Prior to electrical energization of magnet 70, armature 110 is in the rest position illustrated in Fig. 3 where the valve at the end of armature 110 in the form of conical tip 140 is seated in opening 144 to block fluid communication between port 18 and chamber 14. In the rest position of armature 110, pole face 116 is spaced from diaphragm 80 as shown in Fig. 3 thereby defining the gap in the magnetic circuit. In the rest position this gap between pole face 116 and diaphragm 80 is of maximum length.

When coil 74 is electrically energized, the armature pole portion 114 is attracted toward magnet 70 thereby causing armature 110 to be drawn toward diaphragm 80. Electromagnetic flux travels through the magnetic circuit including the electromagnet core 72, plate 78, magnet housing 76, rim 96 of body 90, the included portion of diaphragm 80 between housing 76 and rim 96, body 90, armature pole portion 114, and the gap between pole face 116 and diaphragm 80. As armature 110 is moved in the forward stroke, i.e. in a direction to the left as viewed in Figs. 2 and 3, the armature pole portion 114 moves further into chamber 16, armature pole face 116 moves closer to diaphragm 80 thereby decreasing the gap in the magnetic circuit, and conical surface 140 becomes unseated from the opening of passage 144 thereby placing port 18, chambers 14, 16 and port 20 in fluid communication. Fluid thus flows as indicated by the arrows in Fig. 2 from port 20, through passages 44, 100 into chamber 16, from chamber 16 through passages 102, 52 into chamber 14 and from chamber 14 out through port 18. The forward stroke of armature 110 is completed when pole face 116 approaches contact with diaphragm 80. Actual contact may not be achieved since viscosity limits outflow of the fluid between the pole face 116 and diaphragm 80.

When electrical excitation of coil 74 ceases, armature 110 is moved in the opposite direction i.e. to the right as viewed in Figs. 2 and 3, by the force of biasing spring 130 until the armature reaches the rest position as shown in Fig. 3 with conical tip 140 seated in the opening of passage 144. Armature 110 then remains in the rest position of Fig. 3 closing port 18 and waiting for the next forward stroke which occurs when magnet 70 is energized again. In the illustrative mode wherein coil 74 is excited by the discharge of a capacitor therethrough, the time during which valve 10 places ports 18, 20 in communication, i.e. the time during which valve 10 is open, is relatively short. However, having the valve open for such a relatively short time is called for in typical implantable drug dosage delivery systems. Alternatively, valve 10 can be held open for whatever longer duration may be desired simply by continuing the energization of magnet 70.

The non-movable diaphragm 80 of titanium or like material provides an hermetic seal between the fluid in housing 12 and the electrical components associated with magnet 70. Having armature 110 immersed in the fluid makes operation of the valve nearly independent of ambient pressure. The initial condition of the valve when armature 110 is in the rest position of Fig. 3 is that the fluid is at substantially the same pressure on opposite sides of the pole portion 114, i.e. in the two chambers 14 and 16.

The valve of the present invention is made electrically and magnetically efficient by minimizing the total gap within the magnetic circuit, by having the magnetic pole face 116 of relatively large surface area, and by having core 72 of relatively small diameter. In particular, there is a relatively large contact area at the interface between the axial end face of magnet housing 76 and diaphragm 80 and between diaphragm 80 and the axial end face of rim 96 of body 90 to minimize the effective air gap introduced by diaphragm 80 at this point in the magnetic circuit. Related to this is the need for welding diaphragm 80 to the band 82 and housing part 38 to achieve an hermetic seal between electromagnet 70 and the fluid containing region of housing 12 while at the same time not adversely affecting the magnetic circuit. In addition, there is a relatively large surface area along the gap between body 90 and pole portion 114 to minimize the effective air gap introduced at this point in the magnetic circuit. The relatively small diameter of core 72 provides the necessary ampere turns with a minimum electrical resistance. The large area of pole face 116 provides a high magnetic force with a minimum number of ampere turns. Having the magnetic gap external to coil 74, i.e. between pole face 116 and diaphragm 80, allows the foregoing features to be achieved simultaneously. The external Teflon coating over the gold plating on pole portion 114 reduces magnetic side loading on armature pole portion 114 and reduces operating friction. The combination of the conical formation 140 and the relatively soft body 142 enables the armature 110 to be self-aligning and permits relatively loose tolerance in construction. The valve of the present invention is small in size having an overall · diameter of around 7 millimeters and an overall length of about 25 millimeters, and has the relatively light weight of about 4.25 grams. A valve of the present invention as described hereinabove can be opened with an initial power drain of between about 6 and 10 milliwatts and held open with less than about 2 milliwatts power drain thereby operating at exceptionally low power levels.

The valve of the present invention is illustrated further by the following example and data. A valve as shown in Figs. 1—8 was pulsed to a valve open condition by a 3.3 microfarad capacitor at 9 volts to pass 2.4 microliters per pulse at a pressure difference across the valve of 34.5 kPa (5 p.s.i.). At a 1 milliliter per day flow rate (417 pulses per day) the calculated five year energy requirement from the capacitor is 102 joules. This is less than about 1/2% of the energy available from a model 7911 lithium-iodine cell commercially available from Wilson Greatbatch Ltd., Clarence, New York.

Tables I, II and III present performance data obtained from operating a valve as shown in Figs. 1—8 with water, a coil resistance of about 1 kilohm, 34.5 kPa (5 p.s.i.) pressure difference across the valve, and capacitor magnitudes of 1.5, 3.3 and 4.7 microfarads, respectively:

#### TABLE I
Volume delivered per pulse
vs. capacitor voltage capacitance
of 1.5 microfarads

| Initial capacitor voltage in volts | Volume delivered per pulse in microliters |
| --- | --- |
| 8.5 | 0 |
| 9.0 | 0.4 |
| 9.5 | 0.8 |
| 10.0 | 1.1 |
| 10.5 | 1.3 |
| 11.0 | 1.6 |
| 11.5 | 1.7 |
| 12.0 | 1.8 |
| 12.5 | 2.0 |
| 13.0 | 2.2 |
| 13.5 | 2.3 |

#### TABLE II
Volume delivered per pulse vs.
capacitor voltage capacitance
of 3.3 microfarads

| Initial capacitor voltage in volts | Volume delivered per pulse In microliters |
| --- | --- |
| 6.5 | 0.7 |
| 7.0 | 1.3 |
| 7.5 | 1.7 |
| 8.0 | 2.0 |
| 8.5 | 2.2 |
| 9.0 | 2.4 |
| 10.0 | 2.7 |
| 10.5 | 2.8 |
| 11.0 | 2.9 |
| 12.0 | 3.3 |
| 13.0 | 3.3 |

## TABLE III
### Volume delivered per pulse
### vs. capacitor voltage capacitance
### of 4.7 microfarads

| Initial capacitor voltage in volts | Volume delivered per pulse in microliters |
|---|---|
| 6.0 | 1.3 |
| 6.5 | 1.9 |
| 7.0 | 2.2 |
| 7.5 | 2.6 |
| 8.0 | 2.9 |
| 8.5 | 3.2 |
| 9.0 | 3.6 |
| 9.5 | 3.6 |
| 10.0 | 3.8 |
| 10.5 | 3.8 |
| 11.0 | 3.8 |
| 11.5 | 3.9 |
| 12.0 | 4.0 |
| 12.5 | 4.0 |
| 13.0 | 4.2 |

Tables IV, V and VI present performance data obtained from operating a valve as shown in Figs. 1—8 with water, a coil resistance of about 1 kilohm, 34.5 kPa (5 p.s.i.) pressure difference across the valve, and capacitor magnitudes of 1.5, 3.3 and 4.7 microfarads, respectively:

## Table IV
### Capacitor energy per milliliter
### delivered capacitance of
### 1.5 microfarads

| Volume delivered per pulse (microliters/pulse) | Energy per mL delivered (joules/milliliters) |
|---|---|
| 0.4 | 0.145 |
| 0.7 | 0.100 |
| 0.8 | 0.080 |
| 1.1 | 0.070 |
| 1.3 | 0.060 |
| 1.6 | 0.055 |
| 2.0 | 0.060 |
| 2.2 | 0.060 |

## TABLE V
### Capacitor energy per milliliter
### delivered capacitance of
### 3.3 microfarads

| Volume delivered per pulse (microliters/pulse) | Energy per ML delivered (joules/milliliter) |
|---|---|
| 0.7 | 0.120 |
| 0.9 | 0.080 |
| 1.2 | 0.065 |
| 1.4 | 0.060 |
| 1.6 | 0.055 |
| 1.8 | 0.050 |
| 2.0 | 0.050 |
| 2.3 | 0.055 |
| 2.4 | 0.055 |
| 2.7 | 0.060 |
| 2.9 | 0.070 |
| 3.3 | 0.080 |

## TABLE VI
### Capacitor energy per milliliter
### delivered capacitance of
### 4.7 microfarads

| Volume delivered per pulse (microliters/pulse) | Energy per ML delivered (joules/milliliter) |
|---|---|
| 0.5 | 0.150 |
| 1.2 | 0.070 |
| 1.5 | 0.065 |
| 1.9 | 0.050 |
| 2.2 | 0.050 |
| 2.4 | 0.050 |
| 2.6 | 0.050 |
| 2.8 | 0.050 |
| 2.9 | 0.050 |
| 3.2 | 0.055 |
| 3.6 | 0.060 |
| 3.7 | 0.065 |
| 3.8 | 0.070 |
| 3.9 | 0.080 |
| 4.0 | 0.090 |
| 4.1 | 0.095 |

In a typical implantable drug delivery system, inlet port 20 of valve 10 would be connected to a pressurized supply of the drug, and the valve outlet port 18 would be connected by suitable means to the point of delivery in the patient.

It is therefore apparent that the present invention accomplishes its intended objects. While an embodiment of the present invention has been described in detail, this is for the purpose of illustration, not limitation.

**Claims**

1. An electromagnetic valve comprising: a housing (12) including a fluid containing region (14, 16) and first and second ports (18 and 20) in fluid communication with said region; electromagnet means (70) carried by said housing (12) and located externally of said fluid containing region (14, 16); barrier means (80) of fluid-impervious material for isolating said electromagnet means (70) from said fluid containing region (14, 16); an armature (110) movably positioned in said fluid containing region (14, 16) and having a pole portion (114) located for magnetic attraction by said electromagnet means (70) and having a valve portion (140) located for opening and closing one of said ports to place said ports (18, 20) in fluid communication through said fluid containing region (14, 16) in one control state of the valve and to block fluid communication between said ports (18, 20) through said fluid containing region (14, 16) in another control state of the valve; between said pole portion (114) and said electromagnet means (70) being a gap located in said fluid containing region (14, 16) and external to said electromagnet means (70), said gap being closed in response to electrical energization of said electromagnet means (70) to move said armature (110) to change the control state of said valve, characterised in that a body (90) of magnetically permeable material is positioned in said fluid containing region (14, 16) between said first and second ports (18 and 20), said body (90) having a passage (98) therethrough receiving said armature pole portion (114) in a movable, close-fitting relation, said body (90) defining a portion of a magnetic circuit including said electromagnet means (70), said armature pole portion (114) and said gap between said armature pole portion (114) and said electromagnet means (70).

2. A valve according to Claim 1, characterised in that said body (90) has fluid passage means (102) therein in fluid communication with said fluid containing region (14, 16) to allow fluid in said region to flow through said body (90).

3. A valve according to Claim 1 or Claim 2, characterised in that the axial length of said passage (98) in said body (90) is relatively large as compared to the length of the space between the inner surface of said passage (98) and the outer surface of said armature pole portion (114), to minimize the effective air gap defined therebetween and introduced in said magnetic circuit.

4. A valve according to any one of Claims 1 to 3, characterised in that biasing means (130) operatively engage said armature (110) for urging said armature to a rest position placing the valve in one of said control states.

5. A valve according to any preceding claim, characterised in that said housing (12) and said electromagnet means (70) are elongated and are positioned in end-to-end relation with said barrier means (80) being located between adjacent ends of said housing and said electromagnet.

6. A valve according to any one of Claims 1 to 4, characterised in that said barrier means (80) comprises a thin planar plate of metal and said housing (12) and said electromagnet means (70) are in contact with opposite surfaces of said plate.

7. A valve according to any preceding claim, characterised in that said armature pole portion (114) has a pole face (116) disposed in a plane substantially perpendicular to the direction of movement of said armature (110), said pole face (116) being located to define said gap with said electromagnet means (70).

8. A valve according to Claim 6, characterised in that said electromagnet means (70) includes a housing (76) of magnetically permeable material having an end face contacting one surface of said plate (80).

9. A valve according to Claim 6 or Claim 8, characterised in that the areas of contact of said end faces of said electromagnet housing (76) and said body (90) of magnetically permeable material with said surfaces of said plate (80) are of sufficient size to minimize the effective air gap introduced by said plate (80) in said magnetic circuit.

10. A valve according to any preceding claim, characterised in that said electromagnet means (70) comprises a coil (74) wound on a spool (72) within the housing (76), said electromagnet housing (76) and said valve housing (12) being located on a common axis, and said spool (72) having a relatively small diameter compared with the diameter of said electromagnet housing (76).

11. A valve according to any preceding claim, and for use in an implantable drug delivery system, characterised in that each of said body (90) and armature pole portion (114) is provided with a layer on the outer surface thereof of a material which enhances the compatibility of the drug with the outer surface thereof.

12. A valve according to Claim 11, characterised in that said armature pole portion (114) is provided with an exterior coating of a fluoropolymer material.

13. A valve according to Claim 7, characterised in that said armature (110) comprises a shaft (112) and an enlarged body (114) on one end of said shaft (112), said body (114) being of magnetically permeable material and terminating in said pole face (116) disposed substantially perpendicular to the axis of said shaft (112), the cross-sectional area of said pole face (116) being significantly larger than the cross-sectional area of said shaft (112), said body (114) and shaft (112) being connected together through a bushing (120) of fluoropolymer material.

14. A valve according to any one of Claims 6, 8 or 9, characterised in that said valve housing (12) is elongated having a longitudinal axis, said armature (110) being positioned for movement along said housing longitudinal axis, said fluid containing region (14, 16) of said housing (12) and said electromagnet means (70) being in axially-spaced relation along said housing longitudinal axis, whereby said magnetic circuit includes said body (90) of magnetically permeable material, said armature pole portion (114) and the portions of said barrier plate (80) associated with said electromagnet means (70).

15. A valve according to Claim 14, characterised in that one of said ports (18, 20) is in fluid communication with a chamber (16) defined between said barrier plate (80) and said body (90), said armature pole portion (114) moves in said chamber (16) and has a pole face (116) on the end thereof disposed toward said barrier plate (80), and said gap is defined between said armature pole face (116) and said barrier plate (80), whereby as said gap is reduced during energization of said electromagnet means (70) causing movement of said armature pole face (116) toward said barrier plate (80) said armature valve portion (140) opens the other of said ports (18, 20).

**Patentansprüche**

1. Elektromagnetisches Ventil, enthaltend: ein Gehäuse (12) mit einem ein Fluid enthaltenden Bereich (14, 16) und ersten und zweiten Öffnungen (18 und 20) in Fluidverbindung mit dem Bereich; eine Elektromagneteinrichtung (70), die von dem Gehäuse (12) getragen ist und außerhalb des das Fluid enthaltenden Bereichs (14, 16) gelegen ist; eine Sperreinrichtung (80) aus fluiddichten Material zum Abschließen der Elektromagneteinrichtung (70) gegenüber dem fluiderfüllten Bereich (14, 16); einen Anker (110), der beweglich in dem fluiderfüllten Bereich (14, 16) angeordnet ist und einen Polabschnitt (114) hat, der zur magnetischen Anziehung durch die Elektromagneteinrichtung (70) gelegen ist und einen Ventilabschnitt (140) aufweist, der zum Öffnen und Schließen einer der Öffnungen angeordnet ist, um die Öffnungen (18, 20) durch den fluiderfüllten Bereich (14, 16) in einem Steuerzustand des Ventils in Fluidverbindung zu bringen und die Fluidverbindung durch den fluiderfüllten Bereich (14, 16) zwischen den genannten Öffnungen (18, 20) in dem anderen Steuerzustand des Ventils zu unterbrechen; wobei zwischen dem Polabschnitt (114) und der Elektromagneteinrichtung (70) ein Spalt vorhanden ist, der in dem fluiderfüllten Bereich (14, 16) und außerhalb der Elektromagneteinrichtung (70) gelegen ist, welcher Spalt als Folge der elektrischen Erregung der Elektromagneteinrichtung (70) geschlossen wird, um den Anker (110) zu bewegen, um den Steurzustand des Ventils zu ändern, dadurch gekennzeichnet, daß ein Körper (90) aus magnetisch permeablem Material in dem fluiderfüllten Bereich (14, 16) zwischen der ersten und der zweiten Öffnung (18 und 20) angeordnet ist, wobei der Körper (90) von einem Kanal (98) durchdrungen ist, der den Ankerpolabschnitt (114) in einem beweglichen, eng passenden Verhältnis aufnimmt, wobei der Körper (90) einen Teil eines magnetischen Kreises bildet, der die Elektromagneteinrichtung (70) den Ankerpolabschnitt (114) und den Spalt zwischen dem Ankerpolabschnitt (114) und der Elektromagneteinrichtung (70) enthält.

2. Ventil nach Anspruch 1, dadurch gekennzeichnet, daß der Körper (90) in sich einen Fluiddurchgang (102) aufweist, der in Fluidverbindung mit dem fluiderfüllten Bereich (14, 16) steht, um einen Durchfluß des Fluids in dem Bereich durch den Körper (90) zu ermöglichen.

3. Ventil nach Anspruch 1 oder 2, dadurch gekennzeichnet, daß die axiale Länge des Kanals (98) in dem Körper (90) relativ groß im Vergleich zur Länge des Abstandes zwischen der inneren Oberfläche des Kanals (98) und der äußeren Oberfläche des Ankerpolabschnitts (114) ist, um den effektiven Luftspalt, der dazwischen eingeschlossen wird und in den magnetischen Kreis eingefügt ist, zu minimieren.

4. Ventil nach einem der Ansprüche 1 bis 3, dadurch gekennzeichnet, daß eine Vorspanneinrichtung (130) an dem Anker (110) wirkungsmäßig angreift, um den Anker in eine Ruhestellung zu drücken, die das Ventil in eine der Steuerstellungen versetzt.

5. Ventil nach einem der vorhergehenden Ansprüche, dadurch gekennzeichnet, daß das Gehäuse (12) und die Elektromagneteinrichtung (70) langgestreckt sind und Ende an Ende angeordnet sind, wobei die Sperreinrichtung (80) zwischen benachbarten Enden des Gehäuses und des Elektromagneten angeordnet ist.

6. Ventil nach einem der Ansprüche 1 bis 4, dadurch gekennzeichnet, daß die Sperreinrichtung (80) eine dünne ebene Metallplatte ist und das Gehäuse (12) und die Elektromagneteinrichtung (70) mit entgegengesetzten Oberflächen der Platte in Berührung stehen.

7. Ventil nach einem der vorhergehenden Ansprüche, dadurch gekennzeichnet, daß der Ankerpolabschnitt (114) eine Polfläche (116) aufweist, die in einer Ebene angeordnet ist, die im wesentlichen senkrecht zur Bewegungsrichtung des Ankers (110) verläuft, wobei die Polfläche (116) so gelegen ist, daß sie den Spalt mit der Elektromagneteinrichtung (70) ausbildet.

8. Ventil nach Anspruch 6, dadurch gekennzeichnet, daß die Elektromagneteinrichtung (70) ein Gehäuse (76) aus magnetisch permeablem Material aufweist, das eine Endfläche hat, die die eine Seite der Platte (80) berührt.

9. Ventil nach Anspruch 6 oder 8, dadurch gekennzeichnet, daß die Berührungsflächen der Endfläche des Elektromagnetgehäuses (76) und des Körpers (90) aus magnetisch permeablem Material mit den Oberflächen der Platte (80) ausreichend groß sind, um den wirksamen Luftspalt, der durch die Platte (80) in den magnetischen Kreis eingefügt wird, zu minimieren.

10. Ventil nach einem der vorhergehenden Ansprüche, dadurch gekennzeichnet, daß die Elektromagneteinrichtung (70) eine Spule (74) enthält, die auf einen Spulenkörper in dem Gehäuse (76) gewickelt ist, wobei das Elektromagnetgehäuse (76) und das Ventilgehäuse (12) auf einer gemeinsamen Achse angeordnet sind und der Spulenkörper (12) einen relativ kleinen Durchmesser im Vergleich zu dem Durchmesser des Elektromagnetgehäuses (76) hat.

11. Ventil nach einem der vorhergehenden Ansprüche und zur Verwendung in einem implantierbaren Medikamentenabgabesystem, dadurch gekennzeichnet, daß der Körper (90) und der Ankerpolabschnitt (114) auf ihren Außenseiten mit einer Schicht aus einem Material versehen sind, das die Verträglichkeit des Medikaments mit ihren Außenflächen verbessert.

12. Ventil nach Anspruch 11, dadurch gekennzeichnet, daß der Ankerpolabschnitt (114) mit einer äußeren Beschichtung aus einem Fluorpolymer-Material versehen ist.

13. Ventil nach Anspruch 7, dadurch gekennzeichnet, daß der Anker (110) einen Schaft (112) und einen vergrößerten Körper (114) am einen Ende des Schaftes (112) aufweist, wobei der Körper (114) aus magnetisch permeablem Material besteht und in der Polfläche (116) endet, die im wesentlichen senkrecht zur Achse des Schaftes (112) verläuft, wobei die Querschnittsfläche der Polfläche (116) erheblich größer als die Querschnittsfläche des Schaftes (112) ist und der Körper (114) und der Schaft (112) miteinander durch eine Büchse (120) aus Fluorpolymer-Material verbunden sind.

14. Ventil nach einem der Ansprüche 6, 8 oder 9, dadurch gekennzeichnet, daß das Ventilgehäuse (12) langgestreckt ist und eine Längsachse aufweist, der Anker (110) zur Bewegung längs der Gehäuselängsachse angeordnet ist, der fluiderfüllte Bereich (14, 16) des Gehäuses (12) und die Elektromagneteinrichtung (70) in axial beabstandetem Verhältnis längs der Gehäuselängsachse angeordnet sind, wodurch der magnetische Kreis den Körper (90) aus magnetisch permeablem Material, den Ankerpolabschnitt (114) und Teile der der Elektromagneteinrichtung (70) zugeordneten Sperrplatte (80) umfaßt.

15. Ventil nach Anspruch 14, dadurch gekennzeichnet, daß eine der Öffnungen (18, 20) in Fluidverbindung mit einer Kammer (16) steht, die zwischen der Sperrplatte (80) und dem Körper (90) eingeschlossen ist, der Ankerpolabschnitt (114) sich in der Kammer (16) bewegt und eine Polfläche (116) am einen Ende desselben gegen die Sperrplatte (80) gerichtet ist und der Spalt zwischen der Ankerpolfläche (116) und der Sperrplatte (80) definiert ist, wodurch bei Verminderung des Spaltes während der Erregung der Elektromagneteinrichtung (70), die Bewegung der Ankerpolfläche (116) gegen die Sperrplatte (80) hervorrufend, der Ankerventilabschnitt (140) die andere der Öffnungen (18, 20) öffnet.

**Revendications**

1. Soupape électromagnétique comprenant: un boîtier (12) possédant une région contenant du fluid (14, 16) et un premier et un deuxième orifices (18 et 20) en communication de fluide avec ladite région; des moyens à électro-aimant (70) portés par ledit boîtier (12) et situés à l'extérieur de ladite région contenant du fluide (14, 16); des moyens formant barrière (80) en matière imperméable au fluide pour isoler lesdits moyens à électro-aimant (70) de ladite région contenant du fluide (14, 16); une armature (110) montée avec possibilité de déplacement dans ladite région contenant du fluide (14, 16) et ayant une zone polaire (114) qui est placée de façon à pouvoir être attirée magnétiquement par lesdits moyens à électro-aimant (70) et ayant une partie formant clapet (140) qui est placée de façon à ouvrir et à fermer l'un desdits orifices afin de mettre lesdits orifices (18, 20) en communication de fluide par l'intermédiaire de ladite région contenant du fluide (14, 16) dans l'un des états de commande de la soupape et de supprimer la communication de fluide entre lesdits orifices (18, 20) par l'intermédiaire de ladite région contenant du fluide (14, 16) dans un autre état de commande de la soupape; un intervalle entre ladite zone polaire (114) et lesdits moyens à électro-aimant (70) étant situé dans ladite région contenant du fluide (14, 16) et à l'extérieur desdits moyens à électro-aimant (70), ledit intervalle étant fermé en réponse à l'excitation électrique desdits moyens à électro-aimant (70) pour déplacer ladite armature (110) afin de changer l'état de commande de ladite soupape, caractérisée en ce qu'un corps (90) de matière magnétiquement perméable est placé dans ladite région contenant du fluide (14, 16) entre lesdits premier et deuxième orifices (18, 20), ledit corps (90) étant traversé par un passage (98) recevant ladite zone polaire d'armature (114) avec un faible jeu permettant un mouvement relatif, ledit corps (90) définissant une partie d'un circuit magnétique comprenant lesdits moyens à électro-aimant (70), ladite zone polaire d'armature (114) et ledit intervalle entre ladite zone polaire d'armature (114) et lesdits moyens à électro-aimant (70).

2. Soupape selon la revendication 1, caractérisée en ce que ledit corps (90) possède des moyens formant passage de fluide (102), en communication de fluide avec ladite région contenant du fluide (14, 16) pour permettre au fluide contenu dans ladite région de traverser ledit corps (90).

3. Soupape selon la revendication 1 ou la revendication 2, caractérisée en ce que la longueur axiale dudit passage (98) ménagé dans ledit corps (90) est relativement grande par rapport à la longueur de l'espace compris entre la surface intérieure dudit passage (98) et la surface extérieure de ladite zone polaire d'armature (114), pour minimiser l'entrefer effectif défini entre elles et introduit dans ledit circuit magnétique.

4. Soupape selon l'une quelconque des revendications 1 à 3, caractérisée en ce que des moyens de sollicitation (130) coopèrent avec ladite armature (110) pour solliciter ladite armature (110) vers une position de repos plaçant la soupape dans l'un desdits états de commande.

5. Soupape selon l'une quelconque des revendications précédentes, caractérisée en ce que ledit boîtier (12) et lesdits moyens à électro-aimant (70) sont allongés et placés bout à bout, lesdits moyens formant barrière (80) étant situés entre les extrémités voisines dudit boîtier et dudit électro-aimant.

6. Soupape selon l'une quelconque des revendications 1 à 4, caractérisée en ce que lesdits moyens formant barrière (80) comprennent une mince plaque plane de métal et en ce que ledit boîtier (12) et lesdits moyens à électro-aimant (70) sont en contact avec des surfaces opposées de ladite plaque.

7. Soupape selon l'une quelconque des revendications précédentes, caractérisée en ce que ladite zone polaire d'armature (114) possède une face polaire (116) disposée dans un plan perpendiculaire en substance à la direction de mouvement de ladite armature (110), ladite face polaire (116) étant située de façon à définir ledit intervalle avec lesdits moyens à électro-aimant (70).

8. Soupape selon la revendication 6, caractérisée en ce que lesdits moyens à électro-aimant (70) comprennent un boîtier (76) en matière magnétiquement perméable dont une face d'extrémité est en contact avec l'une des surfaces de ladite plaque (80).

9. Soupape selon la revendication 6 ou la revendication 8, caractérisée en ce que les zones de contact desdites faces d'extrémité dudit boîtier d'électro-aimant (76) et dudit corps (90) en matière magnétiquement perméable avec lesdites surfaces de ladite plaque (80) ont des dimensions suffisantes pour minimiser l'entrefer effectif introduit par ladite plaque (80) dans ledit circuit magnétique.

10. Soupape selon l'une quelconque des revendications précédentes, caractérisée en ce que lesdits moyens à électro-aimant (70) comprennent une bobine (74) enroulée sur un noyau (72) à l'intérieur du boîtier (76), ledit boîtier d'électro-aimant (76) et ledit boîtier de soupape (12) étant situés sur un axe commun et ledit noyau (72) ayant un diamètre relativement petit par rapport au diamètre dudit boîtier d'électro-aimant (76).

11. Soupape selon l'une quelconque des revendications précédentes, à utiliser dans un système implantable de distribution de médicament, caractérisée en ce que ledit corps (90) et ladite zone polaire d'armature (114) sont munis chacun, sur leur surface extérieure, d'une couche d'une matière qui favorise la compatibilité du médicament avec leur surface extérieure.

12. Soupape selon la revendication 11, caractérisée en ce que ladite zone polaire d'armature (114) est munie d'un revêtement extérieur en matière à base de polymère fluoré.

13. Soupape selon la revendication 7, caractérisée en ce que ladite armature (110) comprend une tige (112) et un corps élargi (114) à l'une des extrémités de ladite tige (112), ledit corps (114) étant en matière magnétiquement perméable et se terminant sur ladite face polaire (116) disposée perpendiculairement en substance à l'axe de ladite tige (112), la surface de ladite face polaire (116) en section transversale étant nettement plus grand que la surface de ladite tige (112) en section transversale, lesdits corps (114) et tige (112) étant reliés l'un à l'autre par un manchon (120) en matière à base de polymère fluoré.

14. Soupape selon l'une quelconque des revendications 6, 8 et 9, caractérisée en ce que ledit boîtier de soupape (12) est allongé et possède un axe longitudinal, ladite armature (110) étant placée de façon à pouvoir se déplacer le long dudit axe longitudinal de boîtier, ladite région contenant du fluide (14, 16) dudit boîtier (12) et lesdits moyens à électro-aimant (70) étant écartés axialement le long dudit axe longitudinal de boîtier, ledit circuit magnétique comprenant ainsi ledit corps (90) en matière magnétiquement perméable, ladite zone polaire d'armature (114) et les parties de ladite plaque formant barrière (80) qui sont associées auxdits moyens à électro-aimant (70).

15. Soupape selon la revendication 14, caractérisée en ce que l'un desdits orifices (18, 20) est en communication de fluide avec une chambre (16) définie entre ladite plaque formant barrière (80) et ledit corps (90), ladite zone polaire d'armature (114) se déplace dans ladite chambre (16) et possède une face polaire (116) sur l'une des extrémités de celle-ci orientée vers ladite plaque formant barrière (80) et ledit intervalle est défini entre ladite face polaire d'armature (116) et ladite plaque formant barrière (80), ce grâce à quoi, à mesure que ledit intervalle se réduit lors de l'excitation desdits moyens à électro-aimant (70) provoquant le mouvement de ladite face polaire d'armature (116) vers ladite plaque formant barrière (80), ladite partie d'armature formant clapet (140) ouvre l'autre desdits orifices (18, 20).

Fig. 2.

0 104 787

Fig. 1.

Fig. 3.

Fig. 4.

Fig. 5.

Fig. 6.

Fig. 7.

Fig. 8.